# FASCICULE DE BREVET EUROPEEN

(11) **EP 0 337 863 B1**
(45) Date de publication et mention de la délivrance du brevet: **27.10.1993**
(21) Numéro de dépôt: 89400972.9
(22) Date de dépôt: 10.04.1989
(51) Int. Cl.: B64G 7/00, H02J 3/30

(54) **Dispositif d'entraînement en rotation d'un bras de centrifugeuse et procédé d'alimentation en énergie d'un tel dispositif**
Rotationsantriebsvorrichtung für einen Zentrifugenarm und Energieversorgungsmethode für eine solche Vorrichtung
Rotation drive device for a centrifugal arm and power supply method for such a device

(30) Priorité: 11.04.1988 FR 8804774
(43) Date de publication de la demande: 18.10.1989
(73) Titulaire: ACUTRONIC-FRANCE S.A., F-78340 Les Clayes Sous Bois (FR)
(72) Inventeur: Perdriat, Jacques, F-78580 Maule (FR)
(74) Mandataire: Thévenet, Jean-Bruno

(56) Documents cités:
- EP-A- 0 137 607
- GB-A- 2 081 991
- US-A- 4 321 478
- MISSILES AND ROCKETS, vol. 15, no. 9, 31 août 1964, page 33, Ziff-Daus Publishing Co., New York, US; "Ames centrifuge to be 'Most Sophisticated"

## Description

La présente invention a pour objet un dispositif d'entraînement en rotation d'un bras de centrifugeuse et un procédé d'alimentation en énergie d'un tel dispositif.

L'entraînement en rotation de bras de centrifugeuses implique de disposer de grandes quantités d'énergie avec des temps de réponse très brefs lorsqu'il s'agit de produire des accélérations importantes, ce qui est le cas en particulier pour les centrifugeuses dont le bras tournant est équipé d'une nacelle articulée dans laquelle est placé un pilote devant être soumis à des accélérations et décélérations fortes dans le cadre de simulation de conditions de vol dans des avions supersoniques tels que des avions de chasse.

Le bras tournant d'une telle centrifugeuse d'essais est entraîné en rotation à partir d'un moteur électrique de forte puissance dont la vitesse de rotation est ajustée à l'aide d'un circuit électronique de commande du type redresseur-onduleur si le moteur électrique est un moteur de type synchrone ou asynchrone. Compte tenu des puissances instantanées élevées nécessaires à l'obtention de grands niveaux d'accélération ou de variations brusques d'accélération, il est nécessaire de disposer de sources d'alimentation électrique de très forte puissance, de l'ordre du mégawatt, ce qui implique des frais importants d'installation de lignes spéciales d'alimentation capables d'acheminer de tels niveaux de puissance sur les lieux d'utilisation. De plus, ces lignes spéciales d'alimentation électrique de forte puissance doivent faire l'objet de protections spéciales contre les risques de court-circuit ou de perturbations liées à la présence de charges importantes dont la valeur varie rapidement avec de grandes amplitudes.

La présente invention a pour objet de remédier aux inconvénients précités et de permettre l'entraînement en rotation d'un bras de centrifugeuse, avec des variations rapides de vitesse de rotation et des couples élevés sans qu'il soit nécessaire de disposer de lignes spéciales d'alimentation électrique de forte puissance et sans que l'entraînement en rotation du bras de centrifugeuse provoque des perturbations dans le réseau d'alimentation électrique.

L'invention vise encore à réaliser un dispositif d'entraînement en rotation d'un bras de centrifugeuse qui assure une meilleure sécurité dans la commande des mouvements du bras de centrifugeuse, et des organes suspendus à ce bras, tels qu'une nacelle destinée à recevoir une personne soumise à des essais d'accélération et décélération.

Ces buts sont atteints grâce à un dispositif d'entraînement en rotation d'un bras de centrifugeuse d'essais pour pilotes, comprenant une source d'alimentation électrique et un moteur électrique principal dont la puissance est égale ou supérieure à un mégawatt pour l'entraînement du bras de centrifugeuse, caractérisé en ce que la source d'alimentation électrique comprend un réseau polyphasé d'alimentation moyenne tension dont la puissance est égale ou inférieure au dixième de la puissance du moteur électrique principal, un transformateur polyphasé abaisseur de tension, un premier dispositif statique de commande d'une machine tournante polyphasée, lequel dispositif de commande présente une entrée polyphasée reliée au secondaire du transformateur polyphasé et une sortie polyphasée reliée à un noeud de liaisons électriques polyphasé à fréquence ajustable, une machine tournante polyphasée synchrone reliée électriquement audit noeud, un volant d'inertie couplé mécaniquement à ladite machine tournante polyphasée synchrone et des bornes de sortie reliées audit noeud, en ce que le moteur électrique principal est relié auxdites bornes de sortie par l'intermédiaire d'un second dispositif statique de commande d'un moteur électrique, et en ce que l'ensemble du volant d'inertie et de la machine tournante polyphasée synchrone présente un moment d'inertie par rapport à celui du bras de la centrifugeuse qui est tel que la fréquence de sortie de la machine synchrone soit maintenue entre 48 et 53 Hz.

Les premier et second dispositifs de commande sont , de préférence, eux-mêmes commandés à partir d'un calculateur qui assure en premier lieu la mise en service du premier dispositif de commande pour entraîner la machine tournante synchrone fonctionnant en moteur jusqu'à ce qu'elle atteigne sa vitesse de synchronisme, puis en second lieu la mise en service du second dispositif de commande pour mettre en service le moteur électrique d'entraînement du bras centrifuge.

Le premier dispositif de commande peut présenter un temps de réponse plus long que le second dispositif de commande.

Selon un mode de réalisation plus particulièrement avantageux, le moteur électrique principal est du type moteur alternatif polyphasé et constitue un moteur couple à axe vertical entraînant directement le bras de la centrifugeuse monté à la partie supérieure du moteur.

L'invention a encore pour objet un procédé d'alimentation en énergie d'un moteur électrique principal entraînant en rotation un bras de centrifugeuse, notamment pour une centrifugeuse d'entraînement pour pilotes, la puissance du moteur électrique principal étant égale ou supérieure à un mégawatt, caractérisé en ce qu'il consiste à prélever l'énergie sur un réseau polyphasé principal d'alimentation moyenne tension dont la puissance est inférieure ou égale au dixième de la puissance du moteur électrique de forte puissance ; à emmagasiner progressivement dans un volant d'inertie couplé à une machine tournante polyphasée synchrone fonctionnant en moteur une grande quantité d'énergie cinétique à partir du réseau polyphasé principal d'alimentation moyenne tension ; à prélever l'énergie nécessaire à l'alimentation du moteur électrique d'entraînement en rotation du bras de centrifugeuse à partir de la machine polyphasée fonctionnant en génératrice par l'intermédiaire d'un bus polyphasé à fréquence ajustable, à prélever dans le réseau principal d'alimentation l'énergie nécessaire au maintien de la vitesse de rotation de la machine polyphasée dans la limite de la puissance disponible sur ce réseau, à prélever une partie de l'énergie cinétique stockée dans le volant d'inertie lorsque le mouvement dynamique du bras de centrifugeuse nécessite une puissance supérieure à celle qui est disponible sur le réseau principal d'alimentation et, en cas de ralentissement ou d'arrêt brusque de la rotation du bras de la centrifugeuse à transférer vers le volant d'inertie l'énergie cinétique disponible sur le bras de centrifugeuse, par l'intermédiaire de la machine polyphasée fonctionnant en moteur, et en ce que l'on choisit un ensemble volant d'inertie - machine synchrone dont le moment d'inertie par rapport à celui du bras de centrifugeuse est tel que la fréquence de sortie de la machine synchrone soit maintenue entre 48 et 53 Hz.

D'autres caractéristiques et avantages de la présente invention ressortiront de la description suivante de modes particuliers de réalisation, donnés à titre d'exemple, en référence aux dessins annexés, sur lesquels :
- la figure 1 est une vue schématique de l'ensemble d'un dispositif d'alimentation en énergie électrique et d'entraînement en rotation d'un bras de centrifugeuse, notamment de centrifugeuse d'entraînement pour pilotes,
- la figure 2 est un schéma-bloc montrant de façon plus particulière les circuits de commande et d'asservissement du moteur électrique d'entraînement d'un bras de centrifugeuse,
- la figure 3 est une vue en coupe selon l'axe de rotation d'un bras de centrifugeuse montrant un exemple d'entraînement à l'aide d'un ensemble moteur-réducteur, et
- la figure 4 est une vue en coupe selon l'axe de rotation d'un bras de centrifugeuse montrant un mode de réalisation préférentiel avec entraînement direct à l'aide d'un moteur électrique à couple élevé.

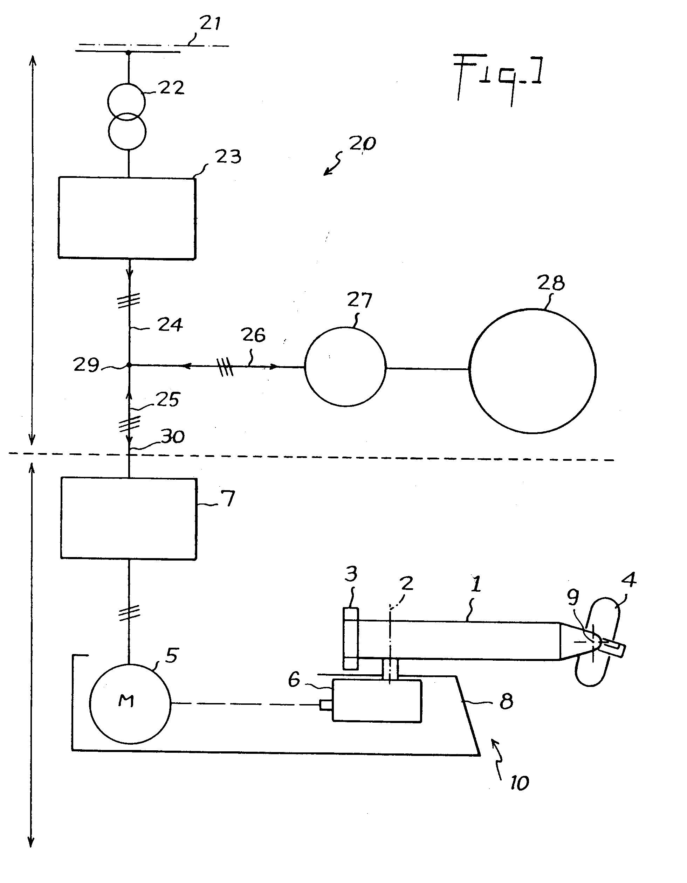

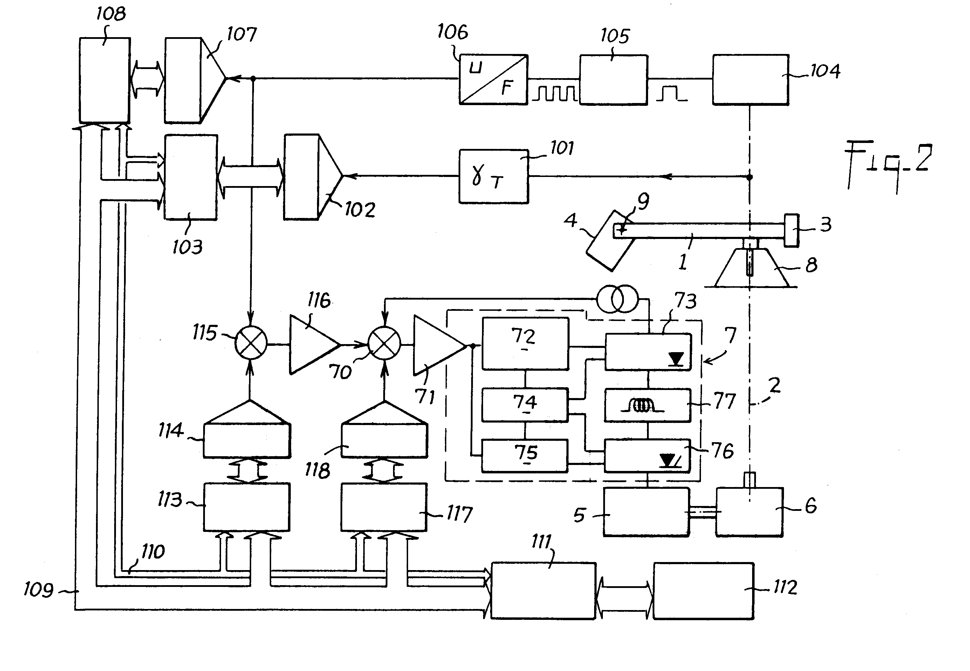

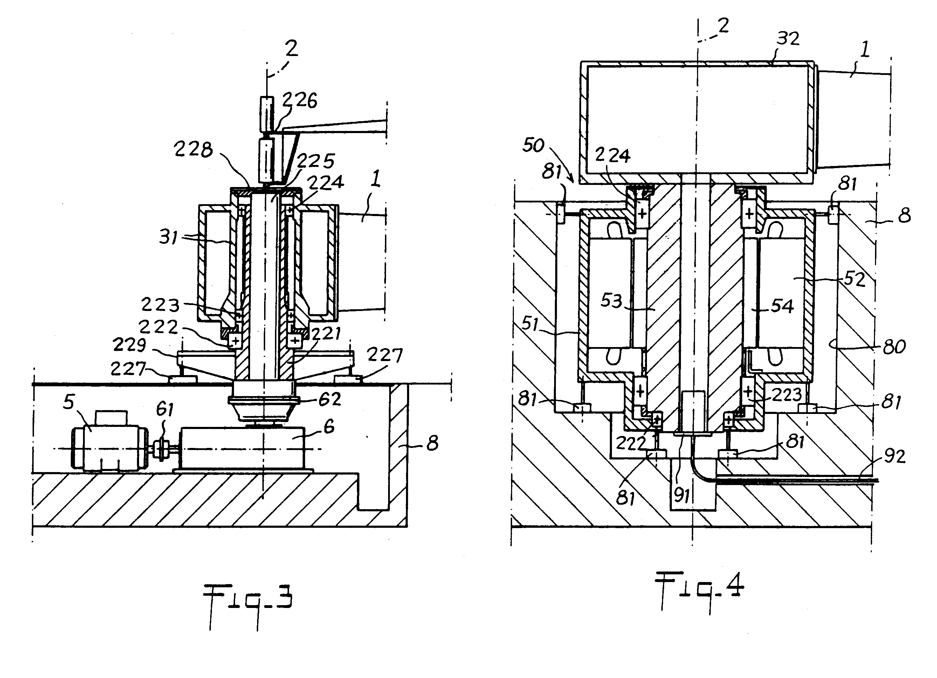

On considérera dans la suite de la description, à titre d'exemple, une centrifugeuse humaine 10 pour l'entraînement de pilotes, comprenant un bras tournant horizontal 1 monté pivotant autour d'un axe vertical 2 et portant à l'une de ses extrémités une nacelle 4 articulée à l'aide d'un système d'articulation 9 afin de présenter un ou deux degrés de liberté de basculement par rapport au bras 1. Du côté de son extrémité opposée à la nacelle 4, le bras est muni de contrepoids 3. Selon un mode de réalisation possible, représenté sur les figures 1 et 3, le bras horizontal 1 est entraîné en rotation à partir d'un moteur électrique 5 à faible couple par l'intermédiaire d'un réducteur 6. Les corps du moteur 5 et du réducteur 6 sont solidement ancrés au sol sur un socle 8. Le moteur électrique 5 peut être un moteur à courant continu mais est de préférence constitué par un moteur triphasé de type synchrone ou asynchrone, dont l'alimentation est assurée par l'intermédiaire d'un circuit électronique de commande 7, du type redresseur-onduleur à thyristors, qui fournit une alimentation triphasée à tension et fréquence variables, à partir d'une source d'énergie électrique 20.

Une centrifugeuse 10 telle que celle représentée schématiquement sur les dessins peut en particulier être destinée à permettre un entraînement pour des pilotes d'avion placés dans la nacelle 4. Les mouvements du bras tournant 1 et de la nacelle 4 peuvent en effet être asservis de manière à recréer des variations d'accélérations, ou le maintien d'accélérations à des niveaux élevés semblables eux conditions de vol dans des avions notamment des avions de chasse. Il est ainsi possible de vérifier le capacité des pilotes à accepter des contraintes d'accélération et à effectuer des manoeuvres visant à lutter contre les effets néfastes de ces accélérations.

Le bras tournant 1 de la centrifugeuse peut présenter une longueur de l'ordre de 6 à 10 mètres et engendre une accélération centrifuge proportionnelle au carré de la vitesse de rotation.

La nacelle 4 articulée selon deux degrés de liberté à une extrémité du bras tournant 1 permet de maintenir les accélérations combinées dues à la force centrifuge et à la gravité selon une direction parallèle au plan de la colonne vertébrale du pilote.

Le bras tournant 1 peut être constitué par exemple d'un ou de deux tubes de grand diamètre présentant une grande rigidité en torsion et en flexion.

Le moteur électrique 5 d'entraînement du bras tournant 1 et le circuit de commande 7 sont asservis pour entraîner le bras 1 à vitesse variable en fonction des conditions d'accélération requises au niveau de la nacelle 4. Un calculateur permet de suivre un programme d'essais préétabli tout en permettant une interruption de ces essais en cas de danger pour le pilote soumis aux essais.

Le fonctionnement d'une centrifugeuse 10 telle que celle qui a été décrite ci-dessus implique de disposer rapidement d'une grande quantité d'énergie électrique lorsqu'il convient de conférer à la nacelle de la centrifugeuse de grandes variations d'accélérations. Ceci implique normalement la présence d'un réseau local de fourniture d'énergie électrique capable de supporter de très hauts niveaux de puissance. La présente invention permet de supprimer la nécessité de disposer d'un tel réseau d'alimentation de forte puissance, grâce à la mise en oeuvre d'un dispositif auxiliaire de régulation des à-coups de courant 22 à 29 qui peut être associé à un réseau d'alimentation normal 21 de relativement faible puissance pour constituer une source d'alimentation 20 répondant aux conditions nécessaires pour alimenter le circuit de commande 7 et par là-même le moteur de centrifugeuse 5.

A titre d'exemple, un moteur 5 et un circuit 7 de commande de moteur nécessitant pour l'entraînement du bras de centrifugeuse 1 des puissances instantanées pouvant aller jusqu'à 1,75 MW peuvent fonctionner à partir d'un réseau d'alimentation triphasée classique fournissant une puissance de 150 kW dans la mesure où l'on met en oeuvre un dispositif auxiliaire de régulation des à-coups de courant 22 à 29 tel que celui représenté sur la figure 1.

Un tel dispositif auxiliaire comprend un transformateur d'entrée triphasé abaisseur 22 dont le primaire est connecté au réseau triphasé d'alimentation moyenne tension de relativement faible puissance 21. Le secondaire du transformateur 22 est connecté à un dispositif de commande 23 d'une machine électrique triphasée 27 couplée mécaniquement à un volant d'inertie 28.

Le dispositif de commande 23 peut être constitué par un convertisseur statique du type redresseur-onduleur à thyristors pour fournir en sortie une alimentation triphasée dont la tension et la fréquence sont ajustables en permanence.

Le dispositif auxiliaire de régulation des à-coups de courant présente un noeud de liaison 29 relié à la sortie du dispositif de commande 23 par des lignes 24, à la machine tournante triphasée 27 par des lignes 26 et à des bornes 30 d'alimentation du dispositif 7 de commande du moteur 5 par des lignes 25.

La machine électrique triphasée 27 peut être de type synchrone ou asynchrone. Toutefois dans la suite de la description on considérera le cas préférentiel de l'utilisation d'une machine synchrone dont le temps de réponse est plus réduit.

A titre d'exemple, pour un bras tournant 1 présentant un moment d'inertie de 120 000 m²Kg, le volant d'inertie 28 peut présenter un moment d'inertie de l'ordre de 720 m²kg. Le rapport entre les moments d'inertie du bras tournant 1 et du volant d'inertie 28 est déterminé de telle manière que la fréquence de sortie de la machine synchrone 27 fonctionnant en alternateur soit comprise dans une plage de fréquences bien déterminée, par exemple entre 48 et 53 Hz, si la fréquence du réseau d'alimentation 21 est de 50Hz.

La machine synchrone 27 est dimensionnée de manière à pouvoir fournir en régime normal, lorsqu'elle fonctionne en alternateur, une puissance de l'ordre de 1100 kW par exemple, le moteur de centrifugeuse 5 présentant lui-même une puissance de même ordre de grandeur.

Le fonctionnement du dispositif auxiliaire 22 à 29, et donc de l'ensemble de la source d'énergie 20 délivrant sur les bornes 30 l'énergie électrique nécessaire au fonctionnement du dispositif de commande 7 et du moteur 5, est le suivent :

Au départ, avant la mise en rotation du bras de centrifugeuse 1, le dispositif de commande 23 assure l'alimentation triphasée de la machine synchrone 27 fonctionnant en moteur. Le moteur synchrone 27 entraîne avec un couple constant le volant d'inertie 28 qui emmagasine de l'énergie cinétique.

Lorsque la machine synchrone 27 a atteint sa vitesse de rotation synchrone, le moteur de centrifugeuse 5 peut être mis en marche par le dispositif de commande 7 qui prélève de l'énergie électrique par les lignes 26, 25 à partir de la machine synchrone 27 fonctionnant en alternateur.

Si la vitesse de l'alternateur synchrone 27 tend à diminuer par suite du prélèvement d'énergie par le moteur de centrifugeuse 5, le dispositif 23 de commande de le machine synchrone 27 dérive de l'énergie du réseau d'alimentation principale 21 pour l'appliquer par les lignes 24, 26 à la machine synchrone 22 fonctionnant alors en moteur. Si dans ce cas le mouvement dynamique du bras de centrifugeuse 1 requiert une puissance plus importante que celle qui est disponible à cet instant dans le réseau principal d'alimentation 21, une partie de l'énergie cinétique emmagasinée dans le volant d'inertie 28 est transférée au bras de centrifugeuse 1.

Inversement, en cas d'arrêt rapide du bras de centrifugeuse 1, l'énergie cinétique de ce bras 1 est renvoyée vers le volant d'inertie 28, par l'intermédiaire de l'énergie électrique appliquée sur les bornes 30 et renvoyée par les lignes 25, 26 vers la machine synchrone 27 fonctionnant en moteur.

Pour des vitesses de rotation constantes de la centrifugeuse, la puissance dissipée dans les circuits et les enroulements du moteur 5, qui est faible, est fournie par le réseau principal d'alimentation 21 à travers le dispositif de commande 23 et les lignes 24, 25.

Le dispositif 20 d'alimentation en énergie électrique selon l'invention permet ainsi de réaliser quatre fonctions qui évitent la nécessité de disposer d'un réseau d'alimentation électrique de forte puissance :
- stockage progressif d'une grande quantité d'énergie cinétique dans un volant d'inertie à partir d'un réseau d'alimentation de moyenne puissance,
- transfert rapide d'une partie de l'énergie cinétique stockée du volant d'inertie au bras de centrifugeuse pour une augmentation rapide de la vitesse de la centrifugeuse,
- transfert rapide en sens inverse de l'énergie cinétique de la centrifugeuse au volant d'inertie pour une diminution rapide de la vitesse de la centrifugeuse,
- fourniture de l'énergie électrique nécessaire pour compenser les pertes dans les circuits et tenir compte de la résistance de l'air.

Le dispositif d'alimentation électrique selon l'invention présente en outre plusieurs avantages particulièrement importants. Ainsi, le réseau d'alimentation 21 est protégé contre les risques que peuvent créer de brusques variations de charges importantes et les interférences électromagnétiques induites dans le réseau d'alimentation 21 sont réduites. De plus, un fonctionnement continu de la centrifugeuse peut être maintenu sans perturbations, même lorsque l'alimentation du réseau 21 présente des interruptions temporaires de faible durée, de l'ordre de quelques secondes.

Compte tenu des rôles différents joués par les circuits de commande 23 et 7, la constante de temps du circuit 23 de commande de la machine synchrone 27 peut être supérieure à celle du circuit 7 de commande du moteur 5.

On décrira maintenant brièvement en référence à la figure 2 les circuits d'asservissement du bras de centrifugeuse 1.

Le dispositif de commande des mouvements de rotation du bras de centrifugeuse 1 comprend essentiellement un asservissement de type analogique autour d'une boucle de courant interne.

La vitesse de rotation du bras 1 de la centrifugeuse est déterminée par un codeur optique 104 délivrant des signaux à un circuit 105 de mise en forme d'impulsions, lui-même relié à un convertisseur fréquence-tension 106 dont la sortie est appliquée d'une part à un comparateur d'entrée 115 d'une boucle de commande comportant un amplificateur 116, d'autre part à un convertisseur 107 analogique-numérique relié par un étage tampon multiplex 108 aux bus de données 109 et d'adresses 110 communiquant par une interface parallèle 111 avec une unité centrale 112 du calculateur gèrant le système.

L'accélération tangentielle sur le bras 1 est elle-même mesurée par un accéléromètre 101 dont les signaux de sortie sont appliqués par un convertisseur analogique-numérique 102, un étage tampon 103 et les bus 109, 110 à l'unité centrale 112 du calculateur. Le calculateur permet d'appliquer par un étage tampon 113 et un convertisseur numérique-analogique 114 des signaux analogiques au comparateur 115 et par un étage tampon 117 et un convertisseur numérique-analogique 118 des signaux analogiques à un comparateur 70 placé en sortie de l'amplificateur 116 et à l'entrée d'une boucle de courant interne. Le comparateur 70 reçoit ainsi les signaux de contre réaction de courant correspondant au courant appliqué au dispositif 7 de commande du moteur 5 pour réguler la vitesse de rotation de ce moteur 5.

Lorsque le moteur 5 est de type asynchrone, le dispositif de commande 7 est constitué par un dispositif du type redresseur-onduleur et comprend un étage redresseur 73, un étage 77 de traitement de courant continu et un étage onduleur 76 appliquant un courant triphasé de tension et fréquence variables au moteur 5. L'amplificateur 71 de la boucle interne de courant applique des signaux aux organes 72, 75 de commande des étages redresseur 73 et onduleur 76, eux-mêmes reliés également à un circuit de protection 74. Les circuits d'asservissement peuvent être réalisés de façon classique et ne seront donc pas décrits de façon plus détaillée.

Dans le cas d'une centrifugeuse humaine, la nacelle 4 est elle-même équipée de deux moteurs-couples pour permettre des basculements autour de deux axes rectangulaires. Chaque moteur comprend un rotor et un stator qui sont chacun directement attachés aux pièces mécaniques entre lesquelles doit être produit un mouvement relatif de rotation. Chaque moteur-couple est alimenté individuellement par un amplificateur triphasé muni de circuits d'ajustement de l'amplitude et de la fréquence du courant fourni. Des accéléromètres permettent de mesurer les accélérations selon les deux axes selon lesquels la position de la nacelle doit être ajustée. Les circuits d'asservissement de la position de la nacelle 4 coopérant avec les moteurs-couples et les accéléromètres peuvent être classiques et ne seront pas décrits de façon plus détaillée.

On décrira maintenant en référence aux figures 3 et 4 deux modes de réalisation de moteurs d'entraînement 5 du bras tournant 1 de la centrifugeuse.

Selon un premier mode de réalisation, représenté sur la figure 3, le montage du bras tournant 1 est réalisé à l'aide d'un arbre creux vertical de grand diamètre 221 supporté par une étoile 229 à quatre branches qui est fixée sur un socle de béton par des pieds 227 constitués par des ressorts d'acier équipés de jauges de contrainte permettant de mesurer les déséquilibres dynamiques.

La tourelle 31 sur laquelle est montée le bras 1 est montée sur l'arbre creux 221 à l'aide de deux paliers radiaux 223, 224 à rouleaux et d'une butée inférieure 222. L'arbre vertical de transmission 225 est disposé au centre de l'arbre creux 221 et couplé à la tourelle 31 par un diaphragme 228, et à un réducteur 6 par un accouplement 62.

Le réducteur 6 dont le rapport de réduction peut être par exemple de 1/25e présente un axe d'entrée horizontal et un axe de sortie vertical. Les axes d'entrée et de sortie sont couplés par des accouplements 61, 62 à engrenages avec respectivement le moteur 5 et l'arbre 225. Dans le cas du mode de réalisation de la figure 3, le moteur 5 de forte puissance présente un faible couple et peut présenter une vitesse de rotation ajustable de 0 à 1000 tours par minute.

Les liaisons électriques entre la nacelle solidaire du bras tournant 1 et la source d'alimentation électrique ou le calculateur de commande placés dans des positions fixés sur le sol sont effectuées au moyen de contacts tournants 226 situés au-dessus de l'arbre tournant vertical 225.

La figure 4 montre un autre exemple de réalisation de l'entraînement d'un bras tournant 1. Cet autre exemple de réalisation présente plusieurs avantages importants par rapport au mode de réalisation de la figure 3 et doit être considéré comme un mode de réalisation préférentiel.

On voit sur la figure 4 un bras tournant 1 avec sa tourelle 32, qui est entraîné directement à partir d'un moteur électrique 50 de forte puissance et à grand couple, qui assure l'ensemble des fonctions jouées par les éléments 5, 61, 6, 62 de la figure 3. Ainsi, le moteur 50 comprend un rotor vertical intérieur 53 pouvant tourner autour de l'axe vertical 2 de rotation du bras tournant 1 et à la partie supérieure duquel est rapportée la tourelle 32, et un stator extérieur 51 monté directement dans un logement 80 formé dans un massif de maçonnerie 8. Le rotor 53 est monté dans le stator 51 à l'aide de paliers radiaux 223, 224 et d'une butée axiale inférieure 222. Les références 52 et 54 désignent respectivement l'inducteur et l'induit du moteur 50 de la figure 4. La référence 91 désigne un contact tournant disposé à la partie inférieure du rotor 53 et assurant par des fils 92 les liaisons électriques entre le bloc de commande disposé au voisinage de la centrifugeuse et les appareillages disposés dans le logement ménagé dans la tourelle 32.

Le carter du stator 51 du moteur 50 est monté dans le logement 80 par des pieds 81 pouvant être réalisés de façon similaire aux pieds 227 de la figure 3 et munis de jauges de contrainte.

Le mode de réalisation de la figure 4 qui met en oeuvre un moteur électrique alternatif polyphasé 50 de même puissance que le moteur 5 de la figure 3, présente plusieurs avantages du fait de l'entraînement direct du bras de centrifugeuse 1.

Ainsi, la suppression du réducteur 6 et des accouplements 61, 62 élimine le bruit de denture susceptible de perturber l'asservissement, ainsi que les problèmes relatifs à la tenue de ces dentures aux grandes variations du couple transmis.

Les fréquences de résonance de l'ensemble ligne-d'arbre - partie tournante du pivot peuvent être augmentées d'au moins un ordre de grandeur, la fréquence de résonance étant d'environ 2 Hz dans le cas du montage de la figure 3 et d'environ 20 Hz pour le cas du montage de la figure 4. De même les fréquences de résonance de la partie fixe du pivot peuvent être augmentées d'au moins un ordre de grandeur.

Dans le montage de le figure 4, les contacts et joints tournants sont intégrés à l'axe moteur de la machine 1, et le nombre de pièces tournantes est réduit, ce qui simplifie le fabrication des pièces élémentaires, le montage, la maintenance et la sécurité de fonctionnement.

De plus, dans la partie tournante du pivot constituant la tourelle 32, un grand volume est disponible pour l'embarquement des circuits électroniques d'asservissement de la nacelle et des divers appareillages de mesure tandis que le montage de la figure 3 conduit à limiter le volume disponible dans la tourelle 31.

D'une façon générale, l'invention s'appliqua à des installations dans lesquelles, le moteur électrique de forte puissance 5, 50 présente une puissance égale ou supérieure à environ un mégawatt tandis que le réseau polyphasé 21 d'alimentation moyenne tension présente une puissance de l'ordre du dixième de la puissance du moteur électrique 5, 50.

## Revendications

1. Dispositif d'entraînement en rotation d'un bras (1) de centrifugeuse d'essais pour pilotes, comprenant une source d'alimentation électrique (20) et un moteur électrique principal (5;50) dont la puissance est égale ou supérieure à un mégawatt pour l'entraînement du bras de centrifugeuse,
caractérisé en ce que la source d'alimentation électrique (20) comprend un réseau polyphasé d'alimentation moyenne tension (21) dont la puissance est égale ou inférieure au dixième de la puissance du moteur électrique principal (5;50), un transformateur polyphasé abaisseur de tension (22), un premier dispositif (23) statique de commande d'une machine tournante polyphasée, lequel dispositif de commande (23) présente une entrée polyphasée reliée au secondaire du transformateur polyphasé (22) et une sortie polyphasée reliée à un noeud (29) de liaisons électriques polyphasé à fréquence ajustable, une machine tournante polyphasée synchrone (27) reliée électriquement audit noeud (29), un volant d'inertie (28) couplé mécaniquement à ladite machine tournante polyphasée synchrone (27) et des bornes de sortie (30) reliées audit noeud (29), en ce que le moteur électrique principal (5;50) est relié auxdites bornes de sortie (30) par l'intermédiaire d'un second dispositif (7) statique de commande d'un moteur électrique, et en ce que l'ensemble du volant d'inertie (28) et de la machine tournante polyphasée synchrone (27) présente un moment d'inertie par rapport à celui du bras de la centrifugeuse (1) qui est tel que la fréquence de sortie de la machine synchrone (27) soit maintenue entre 48 et 53 Hz.

2. Dispositif selon la revendication 1, caractérisé en ce que le premier dispositif de commande (23) présente un temps de réponse plus élevé que le second dispositif de commande (7).

3. Dispositif selon la revendication 1, caractérisé en ce que les premier et second dispositifs de commande (23, 7) sont eux-mêmes commandés à partir d'un calculateur qui assure en premier lieu la mise en service du premier dispositif de commande (23) pour entraîner la machine tournante synchrone (27) fonctionnant en moteur jusqu'à ce qu'elle atteigne sa vitesse de synchronisme, puis en second lieu la mise en service du second dispositif de commande (7) pour mettre en service le moteur électrique (5;50) d'entraînement du bras centrifuge.

4. Dispositif selon l'une quelconque des revendications 1 à 3, caractérisé en ce que le moteur électrique principal (5) est du type à courant continu.

5. Dispositif selon l'une quelconque des revendications 1 à 3, caractérisé en ce que le moteur électrique principal (5) est du type moteur alternatif polyphasé à faible couple et se trouve couplé au bras de la centrifugeuse (1) par l'intermédiaire d'un réducteur (6).

6. Dispositif selon l'une quelconque des revendications 1 à 3, caractérisé en ce que le moteur électrique principal (50) est du type moteur alternatif polyphasé et constitue un moteur couple à axe vertical (2) entraînant directement le bras (1) de la centrifugeuse monté à la partie supérieure du moteur (50).

7. Dispositif selon la revendication 6, caractérisé en ce que le moteur électrique principal (50) à axe vertical comprend un stator placé en appui dans une cavité (80) formée dans un massif de maçonnerie (8).

8. Dispositif selon la revendication 6 ou 7, caractérisé en ce que les contacts et joints tournants du moteur principal (50) sont intégrés à l'axe moteur vertical de la machine.

9. Dispositif selon l'une quelconque des revendications 6 à 8, caractérisé en ce qu'il comprend une chambre (32) solidaire du bras de centrifugeuse (1) formée au-dessus du moteur principal (50) pour recevoir les appareillages de mesure et les circuits d'asservissement d'une nacelle (4) montée à une extrémité du bras de centrifugeuse (1).

10. Procédé d'alimentation en énergie d'un moteur électrique principal (5;50) entraînant en rotation un bras (1) de centrifugeuse, notamment pour une centrifugeuse d'entraînement pour pilotes, la puissance du moteur électrique principal étant égale ou supérieure à un mégawatt,
caractérisé en ce qu'il consiste à prélever l'énergie sur un réseau polyphasé principal d'alimentation moyenne tension (21) dont la puissance est inférieure ou égale au dixième de la puissance du moteur électrique de forte puissance (5;50); à emmagasiner progressivement dans un volant d'inertie (28) couplé à une machine tournante polyphasée synchrone (27) fonctionnant en moteur une grande quantité d'énergie cinétique à partir du réseau polyphasé principal d'alimentation moyenne tension (21); à prélever l'énergie nécessaire à l'alimentation du moteur électrique (5;50) d'entraînement en rotation du bras de centrifugeuse (1) à partir de la machine polyphasée (27) fonctionnant en génératrice par l'intermédiaire d'un bus polyphasé à fréquence ajustable, à prélever dans le réseau principal d'alimentation (21) l'énergie nécessaire au maintien de la vitesse de rotation de la machine polyphasée (27) dans la limite de la puissance disponible sur ce réseau (21), à prélever une partie de l'énergie cinétique stockée dans le volant d'inertie (28) lorsque le mouvement dynamique du bras de centrifugeuse nécessite une puissance supérieure à celle qui est disponible sur le réseau principal d'alimentation (21) et, en cas de ralentissement ou d'arrêt brusque de la rotation du bras de la centrifugeuse (1) à transférer vers le volant d'inertie (28) l'énergie cinétique disponible sur le bras de centrifugeuse (1), par l'intermédiaire de la machine polyphasée (27) fonctionnant en moteur, et en ce que l'on choisit un ensemble volant d'inertie (28) - machine synchrone (27) dont le moment d'inertie par rapport à celui du bras de centrifugeuse (1) est tel que la fréquence de sortie de la machine synchrone (27) soit maintenue entre 48 et 53 Hz.

## Claims

1. Device for rotary driving a test centrifuge arm (1) for pilots, comprising an electric power supply source (20) and a main electric motor (5; 50) whose power is equal to or greater than one megawatt for driving the centrifuge arm,
characterized in that the electric power supply source (20) includes an average voltage multiphase supply network (21) with power equal to or less than one tenth of the power of the main electric motor (5; 50), a multiphase voltage step-down transformer (22), a first static device (23) for controlling a multiphase rotary machine, said control device (23) having one multiphase input connected to the secondary of the multiphase transformer (22), and a multiphase output connected to a node (29) of electric linkings which is multiphased at an adjustable frequency, a synchronous multiphase rotary machine (27) electrically connected to said node (29), an inertia flywheel (28) coupled mechanically to said synchronous multiphase rotary machine (27) and output terminals (30) connected to said node (29), in that the main electric motor (5; 50) is connected to said output terminals (30) by means of a second static device (7) for controlling an electric motor, and in that the inertia flywheel (28) and synchronous rotary multiphased machine assembly has a moment of inertia with respect to that of the centrifuge arm (1) which is such that the output frequency of the synchronous machine (27) is kept between 48 and 53 Hz.

2. Device according to claim 1, characterized in that the first control device (23) has a time constant higher than that of the second control device (7).

3. Device according to claim 1, characterized in that the first and second control devices (23, 7) are themselves controlled from a computer which firstly ensures the putting into operation of the first control device (23) in order to drive the synchronous rotary machine (27) functioning as a motor until it reaches its synchronism speed, and then secondly the putting into operation of the second control device (7) in order to put into operation the electric drive motor (5; 50) of the centrifuge arm.

4. Device according to any one of claims 1 to 3, characterized in that the main electric motor (5) is a d.c. type motor.

5. Device according to any one of claims 1 to 3, characterized in that the main electric motor (5) is of the low torque multiphase reciprocating motor type and is coupled to the arm of the centrifuge (1) by means of a speed reducing gear pair (6).

6. Device according to any one of claims 1 to 3, characterized in that the main electric motor (50) is of the multiphase reciprocating motor type and constitutes a vertical axis (2) torque motor directly driving the arm (1) of the centrifuge mounted on the upper part of the motor (50).

7. Device according to claim 6, characterized in that the main vertical axis electric motor (50) includes a stator placed in support inside a cavity (80) formed in a masonry foundation (8).

8. Device according to claim 6 or 7, characterized in that the rotary contacts and joints of the main motor (50) are integrated inside the vertical motor axis of the machine.

9. Device according to any one of claims 6 to 8, characterized in that it includes a chamber (32) integral with the centrifuge arm (1) formed above the main power motor (50) in order to receive the measuring instruments and control circuits of a swinging basket (4) mounted at one extremity of the centrifuge arm (1).

10. Method to power-feed a main electric motor (5; 50) rotary-driving a centrifuge arm (1), especially for a drive centrifuge for pilots, the main electric motor having a power equal to or greater than one megawatt, characterized in that it consists of appropriating the energy on an average voltage multiphase main supply network (21) whose power is less than or equal to one tenth of the power of the high-power electric motor (5; 50); of progressively storing in an inertia flywheel (28) coupled to a synchronous type multiphase rotary machine (27) functioning as a motor a large amount of kinetic energy from an average voltage multiphase main supply network (21); of taking the energy required to power-feed the electric motor (5; 50) rotary-driving the centrifuge arm (1) from the multiphase machine (27) functioning as a generator via a multiphase bus having an adjustable frequency, of appropriating from the main supply network (21) the energy required to maintain the speed of rotation of the multiphase machine (27) within the limits of the power available on this network (21), of appropriating one part of the kinetic energy stored in the inertia flywheel (28) when the dynamic movement of the centrifuge arm requires a power greater than that available on the main supply network (21) and, in the event of a slowing down or sudden stoppage of the rotation of the arm of the centrifuge (1), of transferring to the inertia flywheel (28) the kinetic energy available on the centrifuge arm (1) by means of the multiphase machine (27) functioning as a motor, and in that a synchronous machine (27)/inertia flywheel (28) assembly is selected whose moment of inertia with respect to that of the centrifuge arm (1) is such that the output frequency of the synchronous machine (27) is kept between 48 and 53 Hz.

## Patentansprüche

1. Drehantriebsvorrichtung eines Armes (1) einer Übungszentrifuge für Piloten, mit einer elektrischen Stromquelle (20) und einem elektrischen Hauptmotor (5;50), dessen Leistung zum Antrieb des Arms der Zentrifuge gleich oder größer einem Megawatt ist,
dadurch gekennzeichnet, daß die elektrische Stromquelle (20) ein mehrphasiges Stromnetz mittlerer Spannung (21), dessen Leistung gleich oder geringer ist einem Zehntel der Leistung des elektrischen Hauptmotors (5;50), einen mehrphasigen Spannungsverringerungs-Transformator (22), eine erste statische Steuervorrichtung (23) einer mehrphasigen sich drehenden Maschine, wobei die Steuervorrichtung (23) einen mehrphasigen Eingang aufweist, der mit der Sekundärseite des mehrphasigen Transformators (22) verbunden ist, und einen mehrphasigen Ausgang aufweist, der mit einem elektrischen mehrphasigen Verbindungsknoten (29) mit einstellbarer Frequenz verbunden ist, eine mehrphasige synchron-drehende Maschine (27), die elektrisch mit dem Knoten (29) verbunden ist, ein Trägheitsschwungrad (28), das mechanisch mit der mehrphasigen synchron-drehenden Maschine (27) gekoppelt ist, und Ausgangsanschlüsse (30) aufweist, die mit dem Knoten (29) verbunden sind, daß der elektrische Hauptmotor (5;50) mit den Ausgangsanschlüssen (30) über eine zweite statische Steuervorrichtung (7) eines Elektromotors verbunden ist, und daß die Anordnung aus Ausgangsschwungrad (28) und synchron-drehender mehrphasiger Maschine (27) ein Trägheitsmoment bezüglich jenes des Arms (1) der Zentrifuge aufweist, das derart ist, daß die Austrittsfrequenz der synchronen Maschine (27) zwischen 48 und 53 Hz gehalten wird.

2. Vorrichtung nach Anspruch 1, dadurch gekennzeichnet, daß die erste Steuervorrichtung (23) eine Antwortzeit aufweist, die höher ist als jene der zweiten Steuervorrichtung (7).

3. Vorrichtung nach Anspruch 1, dadurch gekennzeichnet, daß die erste und zweite Steuervorrichtung (23,7) selbst ausgehend von einen Rechner gesteuert werden, der vor allem das Inbetriebsetzen der ersten Steuervorrichtung (23) sicherstellt, um die synchron drehende Maschine (27) anzutreiben, die als Motor wirkt, bis sie ihre Synchrongeschwindigkeit erreicht, sodann in zweiter Hinsicht den Betrieb der zweiten Steuervorrichtung (7) sicherstellt, um den elektrischen Antriebsmotor (5;50) des Zentrifugenarms in Betrieb zu setzen.

4. Vorrichtung nach einem der Ansprüche 1 bis 3, dadurch gekennzeichnet, daß der elektrische Hauptmotor (5) vom Typ des kontinuierlichen Stromflusses ist.

5. Vorrichtung nach einem der Ansprüche 1 bis 3, dadurch gekennzeichnet, daß der elektrische Hauptmotor (5) vom Typ eines mehrphasigen abwechselnden Motors mit schwachem Moment ist und sich in Kupplung mit dem Arm (1) der Zentrifuge über ein Getriebe (6) befindet.

6. Vorrichtung nach einem der Ansprüche 1 bis 3, dadurch gekennzeichnet, daß der elektrische Hauptmotor (50) vom Typ des mehrphasigen abwechselnden Motors ist, und ein Motormoment mit vertikaler Achse (2) bildet, der direkt den Arm (1) der Zentrifuge antreibt, der am oberen Bereich des Motors (50) angeordnet ist.

7. Vorrichtung nach Anspruch 6, dadurch gekennzeichnet, daß der elektrische Hauptmotor (50) mit vertikaler Achse einen Stator aufweist, der in Anlage ist gegen eine Vertiefung oder einen Hohlraum (80), der in einem Mauerfundament (8) ausgebildet ist.

8. Vorrichtung nach Anspruch 6 oder 7, dadurch gekennzeichnet, daß die Kontakte und die drehenden Verbindungen des Hauptmotors (50) in der vertikalen Motorachse der Maschine integriert sind.

9. Vorrichtung nach einem der Ansprüche 6 bis 8, dadurch gekennzeichnet, daß sie eine mit dem Arm (1) der Zentrifuge verbundene Kammer (32) aufweist, die oberhalb des Hauptmotors (50) ausgebildet ist, um Meßgeräte und die Regelschaltkreise einer Gondel (4) aufzunehmen, die an einem Ende des Zentrifugenarms (1) angebracht ist.

10. Energiespeiseverfahren eines elektrischen Hauptmotors (5;50), der einen Arm (1) einer Zentrifuge in Drehung versetzt, insbesondere für eine Zentrifuge zum Trainieren von Piloten, wobei die Leistung des elektrischen Hauptmotors größer oder gleich einem Megawatt ist,
dadurch gekennzeichnet, daß es darin besteht, die Energie von einem mehrphasigen Hauptspeisenetz mittlerer Spannung (21) abzunehmen, dessen Leistung geringer oder gleich einem Zehntel der Leistung des Elektromotors von großer Leistung (5;50) ist; progressiv in einem Trägheitsschwungrad (28), das mit einer mehrphasigen synchron drehenden Maschine (27) gekoppelt ist, zu speichern, die als Motor von einer großen Menge von kinetischer Energie wirkt, ausgehend von dem mehrphasigen Hauptspeisenetz mittlerer Spannung (29); die notwendige Energie für das Speisen des Elektromotors (5;50) zum Drehantrieb des Zentrifugenarms (1) ausgehend von der mehrphasigen Maschine (27) abzunehmen, die als Erzeugende über einen mehrphasigen Bus mit einstellbarer Frequenz wirkt, in dem Hauptspeisenetz (21) die notwendige Energie zum Beibehalten der Drehgeschwindigkeit der mehrphasigen Maschine (27) in der Grenze der in diesem Netz (21) verfügbaren Kraft, einen Teil der kinetischen Energie, die in dem Trägheitsschwungrad (28) gespeichert ist abzunehmen, wenn die dynamische Bewegung des zentrifugalen Arms eine Leistung erfordert, die größer ist als jene, die in dem Hauptspeisenetz (21) zur Verfügung steht, und, im Falle des Verlangsamens oder des brüsken Anhaltens der Drehung des Arms der Zentrifuge (1), die verfügbare kinetische Energie an dem Zentrifugenarm (1) über die mehrphasige Maschine (27), die als Motor betrieben wird, zu übertragen, und daß eine Anordnung Schwungrad (28) - Synchronmaschine (27) gewählt wird, deren Trägheitsmoment bezüglich jenem des Zentrifugenarms (1) derart ist, daß die Ausgangsfrequenz der Synchronmaschine (27) zwischen 48 und 53 Hz gehalten wird.
